# EUROPEAN PATENT APPLICATION

(11) **EP 4 815 418 A1**
(43) Date of publication of application: **30.09.2026**
(21) Application number: 25188968.9
(22) Date of filing: 11.07.2025
(51) Int. Cl.: H04N 1/00

(54) **INFORMATION PROCESSING SYSTEM, INFORMATION PROCESSING PROGRAM, AND IMAGE READING APPARATUS**

(30) Priority: 24.03.2025 JP 2025049112
(71) Applicant: FUJIFILM Business Innovation Corp., Minato-ku Tokyo (JP)
(72) Inventor: KATO, Seishiro, Yokohama-shi, Kanagawa (JP); HAYASHI, Kazuo, Yokohama-shi, Kanagawa (JP); NODA, Hisashi, Yokohama-shi, Kanagawa (JP)
(74) Representative: Becker Kurig & Partner Patentanwälte mbB

(57) **Abstract**

An information processing system includes a processor configured to, in a case where a form read by a reading apparatus that transports the form and reads an image of the form does not satisfy requirements for listed items, indicate that the form does not satisfy the requirements, using at least one of a position of the transported form or a mark affixed to the form.

## Description

### BACKGROUND OF THE INVENTION

### (i) Field of the Invention

The present disclosure relates to an information processing system, an information processing program, and an image reading apparatus.

### (ii) Description of Related Art

JP2006-245953A discloses an image reading apparatus including a document feeding and transport unit, an image reading unit, an image data storage unit, a reading abnormality detection unit, a reading result recording unit, and an abnormal image notification unit. The document feeding and transport unit continuously feeds and transports a plurality of documents. The image reading unit reads image data from the document fed and transported by the document feeding and transport unit. The image data storage unit stores the image data read by the image reading unit. The reading abnormality detection unit detects a reading abnormality during the reading of the transported document by the image reading unit. The reading result recording unit records whether a reading abnormality is present or absent. The abnormal image notification unit notifies the user of the read image data in which the reading abnormality has been detected by the reading abnormality detection unit. In the image reading apparatus, in a case where the reading abnormality detection unit detects a reading abnormality during the operation of continuously reading a plurality of documents, the continuous reading operation is not stopped, and the abnormal image notification unit notifies the user of the read image data, in which the reading abnormality has been detected by the reading abnormality detection unit, based on information of the reading result recording unit.

### SUMMARY OF THE INVENTION

As an information processing system, an information processing system including a processor is considered. In the information processing system, the following is considered in which, in a case where a form read by a reading apparatus that transports the form and reads an image of the form does not satisfy requirements for listed items, a processor displays that the form does not satisfy the requirements on a screen.

In the information processing system, it is necessary to sort a form that does not satisfy the requirements and a form that satisfies the requirements while collating the transported form and the display of the screen. Therefore, a sorting operation may be complicated.

An object of the present disclosure is to, in a case where a form read by a reading apparatus does not satisfy requirements for listed items, facilitate a sorting operation of sorting a form that does not satisfy the requirements and a form that satisfies the requirements, as compared to a case where a processor executes only a process of displaying that the form does not satisfy the requirements on a screen.

According to a first aspect of the present disclosure, there is provided an information processing system including a processor configured to, in a case where a form read by a reading apparatus that transports the form and reads an image of the form does not satisfy requirements for listed items, indicate that the form does not satisfy the requirements, using at least one of a position of the transported form or a mark affixed to the form.

According to a second aspect of the present disclosure, in the first aspect, the processor may be configured to, in a case where the form read by the reading apparatus does not satisfy the requirements, affix an identification mark for identifying whether or not the requirements are satisfied to at least one of a form that does not satisfy the requirements or a form that satisfies the requirements.

According to a third aspect of the present disclosure, in the second aspect, the processor may be configured not to, in a case where the form read by the reading apparatus does not satisfy the requirements, affix the identification mark to the form that does not satisfy the requirements and to affix the identification mark to the form that satisfies the requirements.

According to a fourth aspect of the present disclosure, in the second aspect or the third aspect, the processor may be configured to, in a case where the form read by the reading apparatus does not satisfy the requirements, affix the identification mark to a surface opposite to a reading surface of the form.

According to a fifth aspect of the present disclosure, in any one of the first to fourth aspects, the processor may be configured to, in a case where the form read by the reading apparatus does not satisfy the requirements, transport the form that does not satisfy the requirements and the form that satisfies the requirements to different transport destinations.

According to a sixth aspect of the present disclosure, in the fifth aspect, the processor may be configured to, in a case where the form read by the reading apparatus satisfies the requirements, transport the form to a first transport destination and to, in a case where the form read by the reading apparatus does not satisfy the requirements, transport the form that satisfies the requirements to the first transport destination and transport the form that does not satisfy the requirements to a second transport destination.

According to a seventh aspect of the present disclosure, there is provided an information processing program causing a computer to execute a process including, in a case where a form read by a reading apparatus that transports the form and reads an image of the form does not satisfy requirements for listed items, indicating that the form does not satisfy the requirements, using at least one of a position of the transported form or a mark affixed to the form.

According to an eighth aspect of the present disclosure, there is provided an image reading apparatus including: a transport unit that transports a form; a reading unit that reads an image of the form; and an indication unit that, in a case where the form does not satisfy requirements for listed items, indicates that the form does not satisfy the requirements, using at least one of a position of the transported form or a mark affixed to the form.

According to the configuration of the first aspect of the present disclosure, in a case where the form read by the reading apparatus does not satisfy the requirements for the listed items, it is easier to perform a sorting operation of sorting the form that does not satisfy the requirements and the form that satisfies the requirements, as compared to a case where the processor executes only a process of displaying that the form does not satisfy the requirements on the screen.

According to the configuration of the second aspect of the present disclosure, the user can perform the sorting operation of sorting the form that does not satisfy the requirements and the form that satisfies the requirements while checking the identification mark affixed to the form.

According to the configuration of the third aspect of the present disclosure, in a case where the listed items of the form that does not satisfy the requirements are checked, the identification mark is less likely to be a hindrance, as compared to a case where the processor affixes the identification mark to the form that does not satisfy the requirements.

According to the configuration of the fourth aspect of the present disclosure, in a case where the listed items of the reading surface of the form are checked, the identification mark is less likely to be a hindrance, as compared to a case where the processor affixes the identification mark to the reading surface of the form.

According to the configuration of the fifth aspect of the present disclosure, it is easier to perform the operation of gathering only the forms that do not satisfy the requirements together, as compared to a case where the processor always transports the form that does not satisfy the requirements and the form that satisfies the requirements to the identical transport destination.

According to the configuration of the sixth aspect of the present disclosure, it is easier for the user to recognize the form that does not satisfy the requirements, as compared to a case where the processor transports the form that does not satisfy the requirements to the first transport destination.

According to the configuration of the seventh aspect of the present disclosure, in a case where the form read by the reading apparatus does not satisfy the requirements for the listed items, it is easier to perform the sorting operation of sorting the form that does not satisfy the requirements and the form that satisfies the requirements, as compared to a case where the processor executes only the process of displaying that the form does not satisfy the requirements on the screen.

According to the configuration of the eighth aspect of the present disclosure, in a case where the form does not satisfy the requirements for the listed items, it is easier to perform the sorting operation of sorting the form that does not satisfy the requirements and the form that satisfies the requirements, as compared to a case where the indication unit executes only the process of displaying that the form does not satisfy the requirements on the screen.

### BRIEF DESCRIPTION OF THE DRAWINGS

Exemplary embodiment(s) of the present invention will be described in detail based on the following figures, wherein:
FIG. 1 is a schematic diagram showing an image reading system according to the present exemplary embodiment;
FIG. 2A is a diagram showing a state in which a seal is affixed to a requirement-satisfying form, and FIG. 2B is a diagram showing a state in which the seal is not affixed to a requirement-non-satisfying form;
FIG. 3 is a diagram showing an example of listed items of a form according to the present exemplary embodiment;
FIG. 4 is a block diagram showing an example of an information processing apparatus according to the present exemplary embodiment;
FIG. 5 is a block diagram showing an example of a functional configuration of the information processing apparatus according to the present exemplary embodiment;
FIG. 6 is a flowchart showing an example of an image reading flow according to the present exemplary embodiment; and
FIG. 7 is a schematic diagram showing an image reading system including an image reading apparatus according to a modification example.

### DETAILED DESCRIPTION OF THE INVENTION

Hereinafter, an example of an exemplary embodiment of the present invention will be described with reference to the drawings.

### <Image Reading System 100>

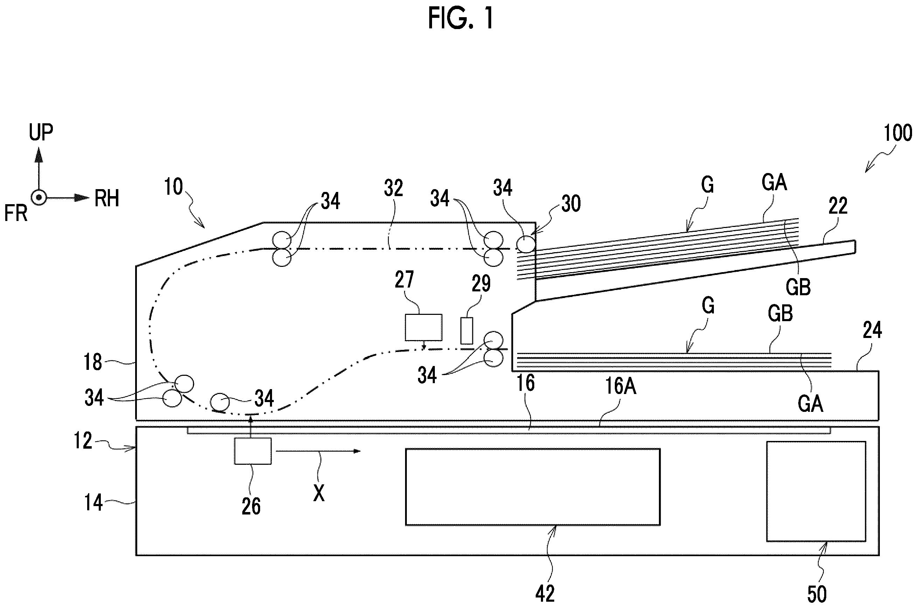

An image reading system 100 according to the present exemplary embodiment will be described. FIG. 1 is a schematic diagram showing the image reading system 100.

In addition, an arrow UP shown in each of the drawings including FIG. 1 indicates an upper side of an apparatus provided in the system. Therefore, an opposite direction of the arrow UP is a lower side of the apparatus. Further, an arrow FR shown in each of the drawings including FIG. 1 indicates a front side of the apparatus. Therefore, an opposite direction of the arrow FR is a rear side of the apparatus. Furthermore, an arrow RH shown in each of the drawings including FIG. 1 indicates a right side of the apparatus. Therefore, an opposite direction of the arrow RH is a left side of the apparatus. Since these directions are directions defined for convenience of description, a configuration of the apparatus is not limited to these directions.

Moreover, a front-rear direction and a right-left direction are directions that can be called a lateral direction, a side direction, and a horizontal direction. In addition, the term "apparatus" may be omitted in each direction of the apparatus. That is, for example, "the upper side of the apparatus" may simply be described as "the upper side". Furthermore, a symbol having "·" written in "∘" in the drawings means an arrow pointing from the back to the front of the paper.

The image reading system 100 is a system that reads an image of a document including a form G. Specifically, as shown in FIG. 1, the image reading system 100 includes an image reading apparatus 10 and an information processing apparatus 50. Hereinafter, each unit of the image reading system 100 will be described. The image reading system 100 is an example of an information processing system.

### <Image Reading Apparatus 10>

The image reading apparatus 10 shown in FIG. 1 is an apparatus that reads the image of the document including the form G. Specifically, as shown in FIG. 1, the image reading apparatus 10 includes an apparatus main body 12, an opening and closing unit 18, a form accommodation unit 22, and a form discharge unit 24. In addition, the image reading apparatus 10 includes a transport unit 30, reading units 26 and 27, a stamping unit 29, and a display unit 42. Hereinafter, each unit of the image reading apparatus 10 will be described. Further, the image reading apparatus 10 is an example of a reading apparatus.

### <Apparatus Main Body 12>

The apparatus main body 12 shown in FIG. 1 is a portion in which each component of the image reading apparatus 10 is provided. The apparatus main body 12 includes a housing 14 and a platen glass 16.

The housing 14 is formed in a box shape with an opening at the top. The platen glass 16 is disposed in the opening of the housing 14. The form G, whose image is to be read in a stationary state, is placed on an upper surface 16A of the platen glass 16. The platen glass 16 transmits light emitted from the reading unit 26 to the form G placed on the upper surface 16A.

In the present exemplary embodiment, the reading unit 26 and the information processing apparatus 50 are disposed inside the apparatus main body 12 (specifically, the housing 14) as shown in FIG. 1. In addition, the display unit 42 is disposed on an outer surface (specifically, a front surface) of the apparatus main body 12.

### <Opening and Closing unit 18>

The opening and closing unit 18 shown in FIG. 1 is a structural portion that is opened and closed with respect to the apparatus main body 12. The opening and closing unit 18 is attached to the apparatus main body 12 to be openable and closable between a closed position (a position shown in FIG. 1) where the upper surface 16A of the platen glass 16 of the apparatus main body 12 is covered and an open position where the upper surface 16A of the platen glass 16 of the apparatus main body 12 is exposed. For example, the opening and closing unit 18 has a rear end portion that is supported by a support portion (not shown) provided on the rear side of the apparatus main body 12 and is opened and closed by moving a front end portion up and down with the rear end portion as a fulcrum.

Further, the opening and closing unit 18 also functions as a structure in which each component of the image reading apparatus 10 is provided. In the present exemplary embodiment, the transport unit 30, the reading unit 27, and the stamping unit 29 are disposed inside the opening and closing unit 18 as shown in FIG. 1. In addition, the form accommodation unit 22 and the form discharge unit 24 are disposed on a side (a right side in FIG. 1) of the opening and closing unit 18 as shown in FIG. 1.

### <Form Accommodation Unit 22>

The form accommodation unit 22 shown in FIG. 1 is a portion that accommodates the form G in the image reading apparatus 10. As shown in FIG. 1, the form accommodation unit 22 extends from the opening and closing unit 18 to a side (specifically, an upper right diagonal side). The form G is stacked on the form accommodation unit 22, and the form accommodation unit 22 accommodates the form G.

The form G accommodated in the form accommodation unit 22 is an object whose image is to be read by the reading units 26 and 27. Examples of the form G include an invoice and a receipt. In addition, the form G is not limited to the above, and various forms can be used.

### <Form Discharge Unit 24>

The form discharge unit 24 shown in FIG. 1 is a portion from which the form G transported by the transport unit 30 is discharged. As shown in FIG. 1, the form discharge unit 24 extends from the opening and closing unit 18 to the side (specifically, the right side) below the form accommodation unit 22. The form G transported by the transport unit 30 is stacked on the form discharge unit 24, and the form discharge unit 24 accommodates the form G.

### <Transport Unit 30>

The transport unit 30 shown in FIG. 1 is a component that transports the form G in the image reading apparatus 10. In the present exemplary embodiment, the transport unit 30 includes a form transport path 32 and a plurality of transport members 34.

The form transport path 32 is a transport path through which the form G is transported. As shown in FIG. 1, the form transport path 32 is formed in a substantially C-shape in a front view from the form accommodation unit 22 to the form discharge unit 24. In addition, the front view means a view from the front side to the rear side.

The transport member 34 is configured as, for example, a transport roller that is rotationally driven. The transport member 34 transports the form G accommodated in the form accommodation unit 22 to the form discharge unit 24 along the form transport path 32. Further, the transport member 34 may be, for example, a transport member, such as a transport belt or a transport drum, and various transport members can also be used.

### <Reading Units 26 and 27>

The reading units 26 and 27 shown in FIG. 1 are components that read the image of the form G transported by the transport unit 30. The reading unit 26 is provided below the platen glass 16 in the apparatus main body 12. The reading unit 26 faces one surface (hereinafter, referred to as a reading surface GA) of the form G transported through the form transport path 32, with the platen glass 16 interposed between the reading unit 26 and the one surface. The reading unit 26 irradiates the reading surface GA of the form G transported through the form transport path 32 with light and focuses reflected light from the reading surface GA with an image sensor to read an image.

The reading unit 26 can read the images of both the form G transported by the transport unit 30 and the form G placed on the upper surface 16A of the platen glass 16. In a case where the image of the form G placed on the upper surface 16A of the platen glass 16 is read, the reading unit 26 is moved in a direction of an arrow X along the platen glass 16 to read the image of the reading surface GA of the form G.

As shown in FIG. 1, the reading unit 27 is disposed on an inner peripheral side of the form transport path 32 having the substantially C-shape on the downstream side of the reading unit 26 in the transport direction in the form transport path 32. The reading unit 27 faces a surface (hereinafter, referred to as an opposite surface GB) that is opposite to the reading surface GA of the form G transported through the form transport path 32. The reading unit 27 irradiates the opposite surface GB of the form G transported through the form transport path 32 with light and focuses reflected light from the opposite surface GB with an image sensor to read an image.

For example, a contact-type image sensor that is called a contact image sensor (CIS) is used as the reading units 26 and 27. In addition, the image sensor used in the reading units 26 and 27 is not limited to the contact-type image sensor and may be, for example, an image sensor such as a charge coupled device (CCD) or a complementary metal oxide semiconductor (CMOS). Various reading units that can read the image of the form G can be used as the reading unit according to the present disclosure.

### <Display Unit 42>

The display unit 42 displays presentation information to be presented to the user to notify the user of the presentation information. Examples of the display unit 42 include a liquid crystal display and an organic electro-luminescence (EL) display. Various notifications can be displayed on the display unit 42.

Further, the display unit 42 functions as an input unit to which an instruction from the user is input. In the present exemplary embodiment, the display unit 42 is configured as, for example, a resistive touch panel or a capacitive touch panel, and an instruction from the user is input to the display unit 42 by a contact operation of the user. The user is an example of a user.

Further, the input unit may be configured separately from the display unit 42. In this case, the input unit may be configured as, for example, an input key (for example, a keyboard, a mouse, or an operation button) through which an input operation is performed by the user.

### <Stamping Unit 29>

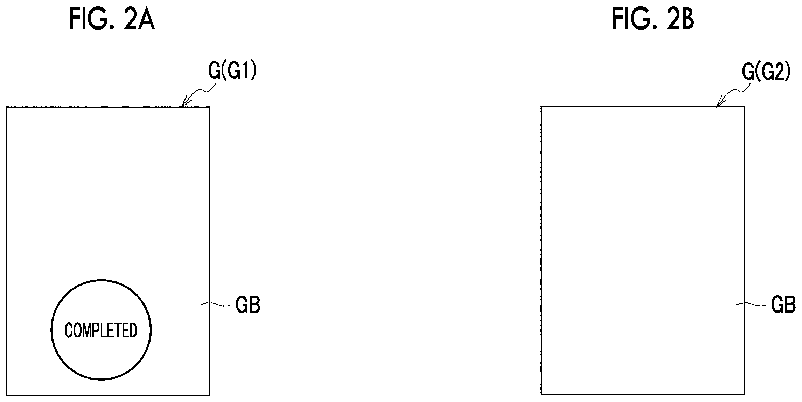

The stamping unit 29 is an example of an indication unit. The stamping unit 29 is disposed on the downstream side of the reading unit 27 in the transport direction and on the upstream side of the form discharge unit 24 in the transport direction in the form transport path 32. In the image reading apparatus 10, in a case where the form G does not satisfy the requirements for the listed items, the stamping unit 29 stamps the form G (hereinafter, referred to as a requirement-satisfying form G1) that satisfies the requirements for the listed items as shown in FIG. 2A. On the other hand, as shown in FIG. 2B, the stamping unit 29 does not stamp the form G (hereinafter, referred to as a requirement-non-satisfying form G2) that does not satisfy the requirements for the listed items. As described above, in a case where the form G does not satisfy the requirements for the listed items, the stamping unit 29 changes the display of the form G between the requirement-satisfying form G1 and the requirement-non-satisfying form G2. In addition, the listed items of the form G and a process of determining whether or not the form G satisfies the requirements for the listed items will be described below.

The stamping unit 29 stamps the requirement-satisfying form G1 and does not stamp the requirement-non-satisfying form G2 to indicate that the requirement-non-satisfying form G2 does not satisfy the requirements. In other words, the stamping unit 29 indicates that the form G does not satisfy the requirements, using the mark affixed to the form G.

A seal indicating that the requirements are satisfied is used as the seal affixed by the stamping unit 29. In the present exemplary embodiment, the stamping unit 29 stamps the requirement-satisfying form G1 and does not stamp the requirement-non-satisfying form G2. Therefore, the seal can be referred to as an identification mark for identifying whether or not the requirements are satisfied. Therefore, the stamping unit 29 can be referred to as a component that affixes the identification mark.

For example, the stamping unit 29 stops the driving of the transport member 34 of the transport unit 30 to stop the form G and applies a stamp to the form G in a stationary state. The stamping unit 29 moves the stamp up and down using a driving unit, such as a cylinder, and stamps the opposite surface GB of the form G.

### <Listed Items of Form G and Process of Determining Whether or Not Requirements for Listed Items Are Satisfied>

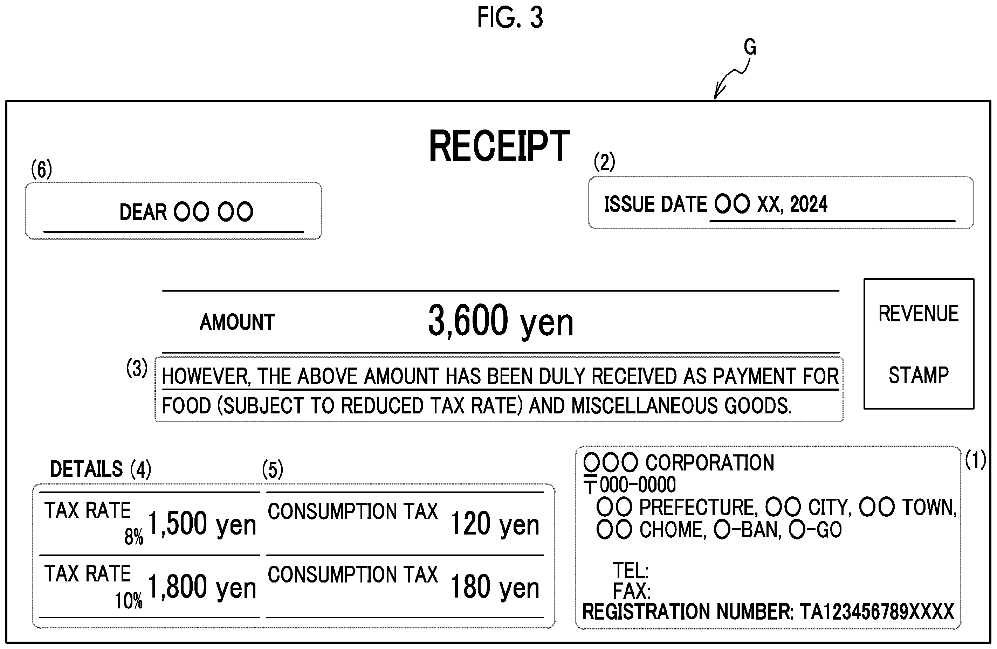

An example of the listed items of the form G is shown in FIG. 3. In a case where the form G is a receipt, the following items (1) to (6) are given as an example of the listed items as shown in FIG. 3. Then, the following items (1) to (6) are the listed items required to apply the input tax credit specified in the Consumption Tax Act. In the present exemplary embodiment, as an example, the requirements for the listed items of the form G are that the following items (1) to (6) are listed.
(1) Name of document creator
(2) Transaction date
(3) Transaction details (in a case where there is a transaction subjected to the reduced tax rate, the fact is stated)
(4) The total amount of tax-inclusive price categorized by tax rate
(5) Consumption tax and others categorized by tax rate
(6) Name of recipient

As described above, the requirements for the listed items can be that the listed items comply with standards such as laws, orders, and ordinances. Further, the requirements for the listed items may be that the listed items comply with the rules set by an organization or a group such as a company, in addition to or instead of complying with the standards.

The information processing apparatus 50 performs the process of determining whether or not the requirements for the listed items are satisfied based on, for example, the image read by the image reading apparatus 10. Specifically, for example, the process is performed as follows. First, text information (that is, text data) is extracted from image information of the read image of the form G read by the reading unit 26. Then, it is determined whether or not the content of the text information satisfies the requirements for the listed items of the form G. In addition, an OCR process is given as an example of the process of extracting the text information from the image information. OCR is an abbreviation for Optical Character Recognition.

### <Information Processing Apparatus 50>

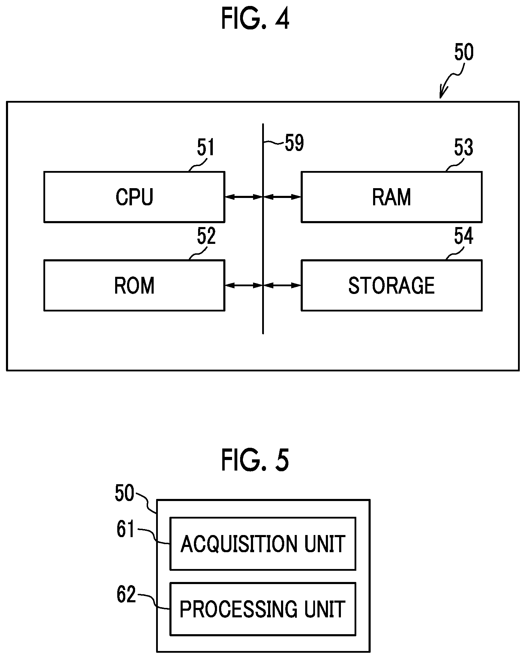

The information processing apparatus 50 has functions of a computer and includes a central processing unit (CPU) 51, a read only memory (ROM) 52, a random access memory (RAM) 53, and a storage 54 as shown in FIG. 4. The CPU 51, the ROM 52, the RAM 53, and the storage 54 are connected to each other via a connection line 59.

The CPU 51 is a central processing unit and executes various programs including an information processing program or controls each unit. The ROM 52 stores various programs including the information processing program and various types of data. The RAM 53 temporarily stores programs or data as a work area. The storage 54 is configured as a storage medium, such as a hard disk drive (HDD), a solid state drive (SSD), or a flash memory, and stores various programs including an operating system and various types of data. In addition, the information processing program may be stored in the storage 54.

In the information processing apparatus 50, the CPU 51 reads various programs including the information processing program from the ROM 52 or from the storage 54 and executes the programs using the RAM 53 as the work area. The CPU 51 executes the information processing program to implement various functions. Hereinafter, a functional configuration implemented by cooperation between the CPU 51 as a hardware resource and the information processing program as a software resource will be described. FIG. 5 is a block diagram showing an example of the functional configuration of the information processing apparatus 50 according to the present exemplary embodiment.

In the information processing apparatus 50, the CPU 51 executes the information processing program to function as an acquisition unit 61 and a processing unit 62 as shown in FIG. 5.

The acquisition unit 61 acquires various user instructions input by the user via the display unit 42 as the input unit. The acquisition unit 61 acquires, for example, a reading instruction to read the image of the form G as the user instruction.

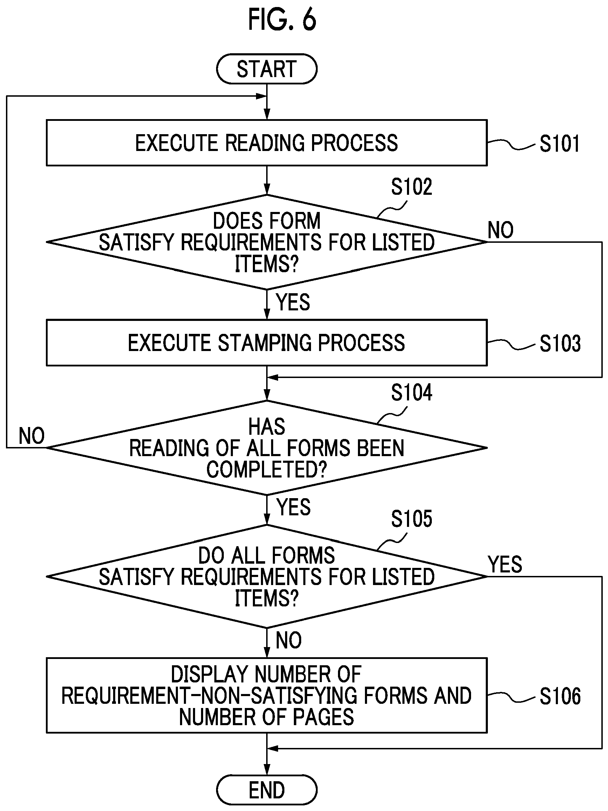

In a case where the acquisition unit 61 acquires the reading instruction, the processing unit 62 executes an image reading flow (see FIG. 6) of reading the image of the form G.

The information processing apparatus 50 may be configured as a single information processing apparatus 50 or may be configured as a plurality of information processing apparatuses 50. Therefore, the process executed by the information processing apparatus 50 may be executed by the single information processing apparatus 50 or may be executed by the plurality of information processing apparatuses 50.

Further, the information processing apparatus 50 may be referred to as a control device that controls each unit of the image reading apparatus 10. The information processing apparatus 50 may be understood as an example of the information processing system. In addition, the information processing apparatus 50 may be understood as a component of the image reading apparatus 10. In this case, the image reading apparatus 10 may be understood as an example of the information processing system.

### <Image Reading Flow>

Next, an example of the image reading flow executed in the image reading system 100 will be described. FIG. 6 is a flowchart showing an example of the image reading flow executed in the image reading system 100. The flow is an example of an information processing method.

The present flow is started to be executed, for example, in a case where the CPU 51 acquires the reading instruction to read the image of the form G. The CPU 51 acquires, for example, the reading instruction as an instruction from the user through the display unit 42.

In a case where the CPU 51 starts the present flow, the CPU 51 executes a reading process of reading the image of the form G in Step S101. In the reading process, in the image reading apparatus 10, the transport unit 30 transports the form G accommodated in the form accommodation unit 22 to the form discharge unit 24, and the reading unit 26 or the reading units 26 and 27 read the image.

Then, in Step S102, the CPU 51 determines whether or not the form G satisfies the requirements for the listed items, using the above-described determination process. In a case where the CPU 51 determines that the form G satisfies the requirements for the listed items (Step S102: YES), the CPU 51 proceeds to Step S103. In a case where the CPU 51 determines that the form G does not satisfy the requirements for the listed items (NO in Step S102), the CPU 51 proceeds to Step S104.

In Step S103, the CPU 51 executes a stamping process of stamping the form G. In the stamping process, the stamping unit 29 stamps the opposite surface GB of the requirement-satisfying form G1. On the other hand, the requirement-non-satisfying form G2 is not stamped. This indicates that the requirement-non-satisfying form G2 does not satisfy the requirements for the listed items. Therefore, the stamping process can be referred to as a process of affixing a mark to the form G (specifically, stamping the requirement-satisfying form G1 and not stamping the requirement-non-satisfying form G2) to indicate that the requirement-non-satisfying form G2 does not satisfy the requirements for the listed items.

As described above, the seal affixed to the form G can be referred to as an identification mark for identifying whether or not the requirements are satisfied. Therefore, the stamping process can be referred to as a process that does not affix the identification mark to the requirement-non-satisfying form G2 and affixes the identification mark to the opposite surface GB of the requirement-satisfying form G1.

In Step S104, the CPU 51 determines whether or not the reading of all of the forms G accommodated in the form accommodation unit 22 has been executed. In a case where the CPU 51 determines that the reading of all of the forms G has been executed (Step S104: YES), the CPU 51 proceeds to Step S105. In a case where the CPU 51 determines that the reading of all of the forms G has not been executed (NO in Step S104), the CPU 51 proceeds to Step S101. That is, in a case where there is the form G that has not been subjected to the reading process, the CPU 51 proceeds to Step S101. Therefore, the CPU 51 repeats Steps S101 to S103 until the reading of all of the forms G is completed.

In Step S105, the CPU 51 determines whether or not all of the forms G satisfy the requirements for the listed items. In a case where it is determined that all of the forms G satisfy the requirements for the listed items (Step S105: YES), the CPU 51 ends the present flow. In a case where it is determined that not all of the forms G satisfy the requirements for the listed items (Step S105: NO), the CPU 51 proceeds to Step S106.

In Step S106, the CPU 51 displays the number of requirement-non-satisfying forms G2 and the number of pages (the number of sheets) of the forms G that do not satisfy the requirements in all of the forms G on the display unit 42 and ends the present flow.

### <Operation According to Present Exemplary Embodiment>

In the present exemplary embodiment, as described above, in a case where the read form G read by the image reading apparatus 10 does not satisfy the requirements for the listed items, the CPU 51 indicate that the form G does not satisfy the requirements for the listed items, using the mark affixed to the form G.

This enables the user to sort the requirement-non-satisfying form G2 and the requirement-satisfying form G1 while checking the mark affixed to the form G. Therefore, in a case where the form G read by the image reading apparatus 10 does not satisfy the requirements for the listed items, it is easier to perform a sorting operation of sorting the requirement-non-satisfying form G2 and the requirement-satisfying form G1 as compared to a case where the CPU 51 executes only the process of displaying that the form G does not satisfy the requirements for the listed items on the screen.

In addition, in the present exemplary embodiment, in a case where the form G read by the image reading apparatus 10 does not satisfy the requirements for the listed items, the CPU 51 does not affix the identification mark to the requirement-non-satisfying form G2 and affixes the identification mark to the requirement-satisfying form G1.

Therefore, in a case where the listed items of the requirement-non-satisfying form G2 are checked, the identification mark is less likely to be a hindrance, as compared to a case where the CPU 51 affixes the identification mark to the requirement-non-satisfying form G2.

In addition, in the present exemplary embodiment, in a case where the form G read by the image reading apparatus 10 does not satisfy the requirements for the listed items, the CPU 51 affixes the identification mark to the opposite surface GB of the form G.

Therefore, in a case where the listed items of the reading surface GA of the form G are checked, the identification mark is less likely to be a hindrance, as compared to a case where the CPU 51 affixes the identification mark to the reading surface GA of the form G.

### <Modification Example of Stamping Process>

In the stamping process (Step S103), the identification mark is not affixed to the requirement-non-satisfying form G2 and is affixed to the opposite surface GB of the requirement-satisfying form G1. However, the present invention is not limited thereto. In the stamping process, for example, the identification mark may be affixed to the requirement-non-satisfying form G2 and may not be affixed to the requirement-satisfying form G1. In addition, for example, the identification mark may be affixed to both the requirement-non-satisfying form G2 and the requirement-satisfying form G1 as the stamping process.

As described above, the following configuration can be adopted: in a case where the form G read by the image reading apparatus 10 does not satisfy the requirements for the listed items, the CPU 51 affixes the identification mark for identifying whether or not the requirements are satisfied to at least one of the requirement-non-satisfying form G2 or the requirement-satisfying form G1.

This enables the user to perform the sorting operation of sorting the requirement-non-satisfying form G2 and the requirement-satisfying form G1 while checking the identification mark affixed to the form G.

A mark or seal indicating that the requirements are not satisfied is used as the identification mark affixed to the requirement-non-satisfying form G2. Therefore, the mark can be referred to as an identification mark for identifying whether or not the requirements are satisfied.

Further, in the stamping process, the identification mark may be affixed to the reading surface GA of the form G. Therefore, the following configuration can be adopted: in a case where the identification mark is affixed to the requirement-satisfying form G1, the identification mark is affixed to at least one of the reading surface GA or the opposite surface GB of the requirement-satisfying form G1. In addition, the following configuration can be adopted: in a case where the identification mark is affixed to the requirement-non-satisfying form G2, the identification mark is affixed to at least one of the reading surface GA or the opposite surface GB of the requirement-non-satisfying form G2.

### <Transport Destination Change Process>

The CPU 51 may execute a transport destination change process of transporting the requirement-non-satisfying form G2 and the requirement-satisfying form G1 to different transport destinations, instead of the stamping process (Step S103).

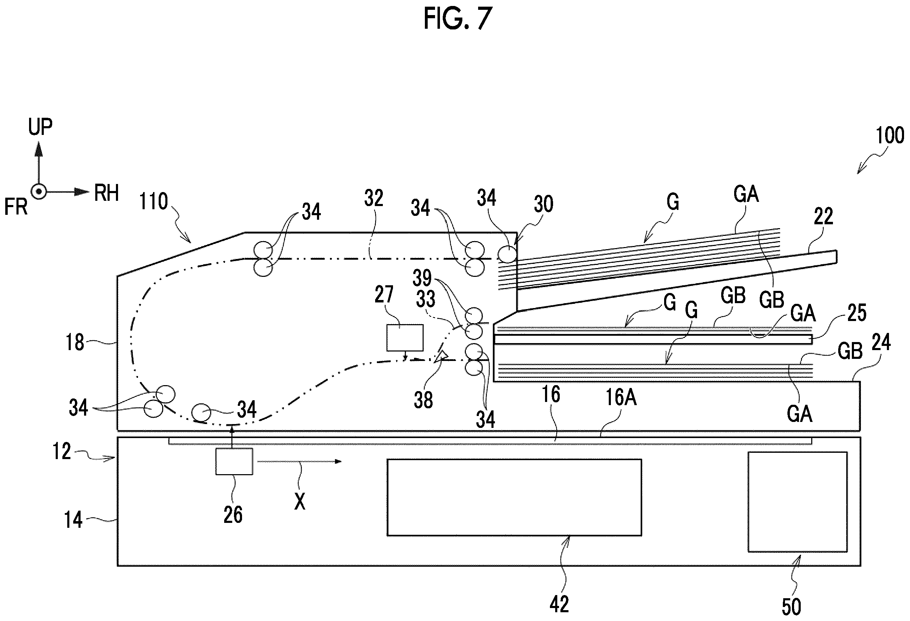

In this case, the image reading system 100 includes an image reading apparatus 110 as shown in FIG. 7. In FIG. 7, the identical reference numerals are given to the identical components with the components in the image reading apparatus 10.

The image reading apparatus 110 includes a form discharge unit 25 in addition to the form discharge unit 24. The transport unit 30 has a form transport path 33 that branches from the form transport path 32 and that is for transporting the form G to the form discharge unit 25. The form transport path 33 branches from the form transport path 32 on the downstream side of the reading unit 27 and on the upstream side of the form discharge unit 24.

Further, the transport unit 30 includes a switching mechanism 38 and a transport member 39. The switching mechanism 38 switches the transport destination to which the form G is transported to either the form discharge unit 24 or the form discharge unit 25. The transport member 39 is a member that transports the form G to the form discharge unit 25. The transport member 39 is configured as, for example, a plurality of transport rollers that are rotationally driven. In addition, the transport member 39 may be, for example, a transport member, such as a transport belt or a transport drum, and various transport members can also be used.

The form discharge unit 24 is an example of a first transport destination. The form discharge unit 25 is an example of a second transport destination. The transport unit 30 is an example of an indication unit. In addition, the image reading apparatus 110 does not have the stamping unit 29.

In the image reading system 100 shown in FIG. 7, the CPU 51 transports the requirement-satisfying form G1 to the form discharge unit 24 and transports the requirement-non-satisfying form G2 to the form discharge unit 25 as the transport destination change process. As described above, in the image reading system 100 shown in FIG. 7, the position of the transported form G (specifically, the transport destination) indicates that the form G does not satisfy the requirements for the listed items. Further, in a case where the form G read by the image reading apparatus 110 satisfies the requirements for the listed items, the CPU 51 transports the form G to the form discharge unit 24.

As described above, in the image reading system 100 shown in FIG. 7, in a case where the form G read by the image reading apparatus 110 does not satisfy the requirements for the listed items, the CPU 51 indicates that the form G does not satisfy the requirements for the listed items, using the position of the transported form G.

Therefore, in a case where the form G read by the image reading apparatus 110 does not satisfy the requirements for the listed items, it is easier to perform the sorting operation of sorting the requirement-non-satisfying form G2 and the requirement-satisfying form G1 as compared to a case where the CPU 51 performs only the process of displaying that the form G does not satisfy the requirements for the listed items on the screen.

In the image reading system 100 shown in FIG. 7, in a case where the form G read by the image reading apparatus 110 does not satisfy the requirements for the listed items, the CPU 51 transports the requirement-non-satisfying form G2 and the requirement-satisfying form G1 to different transport destinations.

Therefore, it is easier to perform the operation of gathering only the requirement-non-satisfying forms G2 together, as compared to a case where the CPU 51 always transports the requirement-non-satisfying form G2 and the requirement-satisfying form G1 to the identical transport destination.

More specifically, in the image reading apparatus 110, in a case where the form G satisfies the requirements for the listed items, the CPU 51 transports the form G to the form discharge unit 24. In a case where the form G does not satisfy the requirements for the listed items, the CPU 51 transports the requirement-satisfying form G1 to the form discharge unit 24 and transports the requirement-non-satisfying form G2 to the form discharge unit 25.

Therefore, it is easier for the user to recognize the requirement-non-satisfying form G2, as compared to a case where the CPU 51 transports the requirement-non-satisfying form G2 to the form discharge unit 24.

In addition, in the image reading system 100 shown in FIG. 7, the transport destination change process is executed instead of the stamping process (Step S103). However, both the stamping process and the transport destination change process may be executed.

In this case, in the image reading apparatus 110, for example, the stamping unit 29 is disposed on the upstream side of a portion in which the form transport path 33 starts to branch from the form transport path 32 and on the downstream side of the reading unit 27. For example, in a case where the form G does not satisfy the requirements for the listed items, the CPU 51 does not affix the identification mark to the requirement-non-satisfying form G2, affixes the identification mark to the requirement-satisfying form G1, transports the requirement-satisfying form G1 to the form discharge unit 24, and transports the requirement-non-satisfying form G2 to the form discharge unit 25.

### <Other Modification Examples>

In the image reading system 100 shown in FIG. 7, as an example of indicating that the form G does not satisfy the requirements for the listed items using the position of the transported form G, the requirement-non-satisfying form G2 and the requirement-satisfying form G1 are transported to different transport destinations. However, the present invention is not limited thereto. For example, in a case where the form G is discharged to the form discharge unit 24, the requirement-non-satisfying form G2 and the requirement-satisfying form G1 may be discharged to deviate in the direction intersecting the transport direction.

That is, in the image reading apparatuses 10 and 110, in a case where the form G does not satisfy the requirements for the listed items, the CPU 51 may discharge the requirement-satisfying form G1 to the form discharge unit 24 and discharge the requirement-non-satisfying form G2 to the form discharge unit 24 at a position that deviates from the requirement-satisfying form G1 in the intersection direction.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the program of the present application may be provided as a program product.

The present invention is not limited to the above-mentioned exemplary embodiment, and various modifications, changes, and improvements can be made without departing from the gist of the present invention. For example, two or more of the above-described modification examples may be configured to be combined with each other as appropriate.

### (Supplementary Notes)

(((1))) An information processing system comprising:
   a processor configured to:
   in a case where a form read by a reading apparatus that transports the form and reads an image of the form does not satisfy requirements for listed items, indicate that the form does not satisfy the requirements, using at least one of a position of the transported form or a mark affixed to the form.
(((2))) The information processing system according to (((1))), wherein the processor is configured to:
   in a case where the form read by the reading apparatus does not satisfy the requirements, affix an identification mark for identifying whether or not the requirements are satisfied to at least one of a form that does not satisfy the requirements or a form that satisfies the requirements.
(((3))) The information processing system according to (((2))), wherein the processor is configured to:
   in a case where the form read by the reading apparatus does not satisfy the requirements, not affix the identification mark to the form that does not satisfy the requirements and affix the identification mark to the form that satisfies the requirements.
(4) The information processing system according to (((2))) or (((3))), wherein the processor is configured to:
   in a case where the form read by the reading apparatus does not satisfy the requirements, affix the identification mark to a surface opposite to a reading surface of the form.
(((5))) The information processing system according to any one of (((1))) to (((4))), wherein the processor is configured to:
   in a case where the form read by the reading apparatus does not satisfy the requirements, transport the form that does not satisfy the requirements and the form that satisfies the requirements to different transport destinations.
(6) The information processing system according to (((5))), wherein the processor is configured to:
   in a case where the form read by the reading apparatus satisfies the requirements, transport the form to a first transport destination; and
   in a case where the form read by the reading apparatus does not satisfy the requirements, transport the form that satisfies the requirements to the first transport destination and transport the form that does not satisfy the requirements to a second transport destination.
(((7))) An information processing program causing a computer to execute a process comprising:
   in a case where a form read by a reading apparatus that transports the form and reads an image of the form does not satisfy requirements for listed items, indicating that the form does not satisfy the requirements, using at least one of a position of the transported form or a mark affixed to the form.
(((8))) An image reading apparatus comprising:
   a transport unit that transports a form;
   a reading unit that reads an image of the form; and
   an indication unit that, in a case where the form does not satisfy requirements for listed items, indicates that the form does not satisfy the requirements, using at least one of a position of the transported form or a mark affixed to the form.

According to the configuration of (((1))), in a case where the form read by the reading apparatus does not satisfy the requirements for the listed items, it is easier to perform a sorting operation of sorting the form that does not satisfy the requirements and the form that satisfies the requirements, as compared to a case where the processor executes only a process of displaying that the form does not satisfy the requirements on the screen.

According to the configuration of (((2))), the user can perform the sorting operation of sorting the form that does not satisfy the requirements and the form that satisfies the requirements while checking the identification mark affixed to the form.

According to the configuration of (((3))), in a case where the listed items of the form that does not satisfy the requirements are checked, the identification mark is less likely to be a hindrance, as compared to a case where the processor affixes the identification mark to the form that does not satisfy the requirements.

According to the configuration of (((4))), in a case where the listed items of the reading surface of the form are checked, the identification mark is less likely to be a hindrance, as compared to a case where the processor affixes the identification mark to the reading surface of the form.

According to the configuration of (((5))), it is easier to perform the operation of gathering only the forms that do not satisfy the requirements together, as compared to a case where the processor always transports the form that does not satisfy the requirements and the form that satisfies the requirements to the identical transport destination.

According to the configuration of (((6))), it is easier for the user to recognize the form that does not satisfy the requirements, as compared to a case where the processor transports the form that does not satisfy the requirements to the first transport destination.

According to the configuration of (((7))), in a case where the form read by the reading apparatus does not satisfy the requirements for the listed items, it is easier to perform the sorting operation of sorting the form that does not satisfy the requirements and the form that satisfies the requirements, as compared to a case where the processor executes only the process of displaying that the form does not satisfy the requirements on the screen.

According to the configuration of (((8))), in a case where the form does not satisfy the requirements for the listed items, it is easier to perform the sorting operation of sorting the form that does not satisfy the requirements and the form that satisfies the requirements, as compared to a case where the indication unit executes only the process of displaying that the form does not satisfy the requirements on the screen.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10, 110: image reading apparatus (example of reading apparatus)
24: form discharge unit (example of transport destination and first transport destination)
25: form discharge unit (example of transport destination and second transport destination)
26, 27: reading unit
29: stamping unit (example of indication unit)
30: transport unit
51: CPU (example of processor)
100: image reading system (example of information processing system)
G: form

## Claims

1. An information processing system comprising:
a processor configured to:
in a case where a form read by a reading apparatus that transports the form and reads an image of the form does not satisfy requirements for listed items, indicate that the form does not satisfy the requirements, using at least one of a position of the transported form or a mark affixed to the form.

2. The information processing system according to claim 1, wherein the processor is configured to:
in a case where the form read by the reading apparatus does not satisfy the requirements, affix an identification mark for identifying whether or not the requirements are satisfied to at least one of a form that does not satisfy the requirements or a form that satisfies the requirements.

3. The information processing system according to claim 2, wherein the processor is configured to:
in a case where the form read by the reading apparatus does not satisfy the requirements, not affix the identification mark to the form that does not satisfy the requirements and affix the identification mark to the form that satisfies the requirements.

4. The information processing system according to claim 2 or 3, wherein the processor is configured to:
in a case where the form read by the reading apparatus does not satisfy the requirements, affix the identification mark to a surface opposite to a reading surface of the form.

5. The information processing system according to any one of claims 1 to 4, wherein the processor is configured to:
in a case where the form read by the reading apparatus does not satisfy the requirements, transport the form that does not satisfy the requirements and the form that satisfies the requirements to different transport destinations.

6. The information processing system according to claim 5, wherein the processor is configured to:
in a case where the form read by the reading apparatus satisfies the requirements, transport the form to a first transport destination; and
in a case where the form read by the reading apparatus does not satisfy the requirements, transport the form that satisfies the requirements to the first transport destination and transport the form that does not satisfy the requirements to a second transport destination.

7. An information processing program causing a computer to execute a process comprising:
in a case where a form read by a reading apparatus that transports the form and reads an image of the form does not satisfy requirements for listed items, indicating that the form does not satisfy the requirements, using at least one of a position of the transported form or a mark affixed to the form.

8. An image reading apparatus comprising:
a transport unit that transports a form;
a reading unit that reads an image of the form; and
an indication unit that, in a case where the form does not satisfy requirements for listed items, indicates that the form does not satisfy the requirements, using at least one of a position of the transported form or a mark affixed to the form.
